(19) Europäisches Patentamt
European Patent Office
Office européen des brevets

(11) **EP 4 589 726 A1**

(12) **EUROPEAN PATENT APPLICATION**
published in accordance with Art. 153(4) EPC

(43) Date of publication:
**23.07.2025 Bulletin 2025/30**

(21) Application number: **23865899.1**

(22) Date of filing: **15.09.2023**

(51) International Patent Classification (IPC):
*H01M 10/54* (2006.01)          *C22B 7/00* (2006.01)
*B09B 3/40* (2022.01)           *F27D 5/00* (2006.01)
*F27D 19/00* (2006.01)          *C22B 23/02* (2006.01)
*C22B 26/12* (2006.01)          *C22B 47/00* (2006.01)

(52) Cooperative Patent Classification (CPC):
**B09B 3/40; C22B 7/00; C22B 23/02; C22B 26/12;
C22B 47/00; F27D 5/00; F27D 19/00; H01M 10/54**

(86) International application number:
**PCT/KR2023/013920**

(87) International publication number:
**WO 2024/058603 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022   KR 20220117270
14.09.2023   KR 20230122682**

(71) Applicant: **RD Solution Co., Ltd.
Jeollabuk-do 55365 (KR)**

(72) Inventors:
• **YOON, Jeongsuk**
  **Daejeon 35211 (KR)**
• **YU, Jongyeong**
  **Daejeon 35211 (KR)**
• **KWON, Yongjun**
  **Daejeon 35211 (KR)**

(74) Representative: **Jung, Minkyu
Wuesthoff & Wuesthoff
Patentanwälte und Rechtsanwalt PartG mbB
Schweigerstraße 2
81541 München (DE)**

(54) **APPARATUS FOR RECYCLING WASTE BATTERIES**

(57)     The present invention provides an apparatus for recycling of waste batteries, the apparatus including a working part in which objects are placed to heat the objects and recover valuable metals from the objects, wherein in the working part, the objects are heat-treated in a mixed reducing gas atmosphere in which log(PCO2/PCO), which is a logarithmic value of a division value of partial pressures of carbon dioxide and carbon monoxide, ranges from -2.15 to 2.5. According to the present invention, heat treatment efficiency can be maximized by preventing carbon emission in a process of heat treatment of waste batteries and actively controlling a gas environment in which carbon monoxide and carbon dioxide are mixed.

FIG. 4

SET LOGARITHMIC VALUE OF PARTIAL PRESSURES OF CO AND CO$_2$

INPUT PREDETERMINED GAS

OPEN AND EXHAUST FIRST GAS DISCHARGE PART

**Description**

[Technical Field]

The present invention relates to an apparatus for recycling of waste batteries. Specifically, the present invention relates to an apparatus for recycling of waste batteries that can maximize heat treatment efficiency by controlling a partial pressure of a gas, such as carbon monoxide and carbon dioxide, that is input for firing of waste batteries.

[Background Art]

With the movement to spread electric vehicles becoming more active following carbon neutrality declarations worldwide, the use of battery packs containing multiple battery cells is increasing, and the need for research on battery recycling means is also increasing accordingly.

In particular, lithium-ion secondary batteries are used in portable electronic devices, electric vehicles, etc., due to having high energy density and low self-discharge effect. As the use of lithium-ion secondary batteries increases, the amount of used waste batteries also increases, and it is estimated that about 5.7 million waste batteries for electric vehicles will be generated before 2040.

In line with such demand, a hydrometallurgical process in which valuable metals are recovered from waste batteries using a large amount of acid is being used for waste batteries. However, the hydrometallurgical process has problems that mass treatment is difficult, and it is not eco-friendly.

In order to make up for such shortcomings, a existing pyrometallurgical process has emerged that utilizes a reducing gas to recycle waste batteries, and there is a need to develop a method for increasing a recovery rate of valuable metals from waste batteries in the existing pyrometallurgical process and an apparatus for recycling of waste batteries to which the method is applied.

[Disclosure]

[Technical Problem]

Various embodiments of the present invention are intended to address the above problems and is directed to maximizing thermal efficiency by controlling a partial pressure of a gas in a heating process for recycling waste batteries.

The present invention is also directed to minimizing the generation of unnecessary substances such as carbon.

Objectives of the present invention are not limited to those mentioned above, and other unmentioned objectives should be clearly understood by those of ordinary skill in the art based on the description below.

[Technical Solution]

To this end, the present invention provides an apparatus for recycling of waste batteries, the apparatus including a working part in which objects are placed to heat the objects and recover valuable metals from the objects, wherein in the working part, the objects are heat-treated in a mixed reducing gas atmosphere in which $\log(PCO2/PCO)$, which is a logarithmic value of a division value of partial pressures of carbon dioxide and carbon monoxide, ranges from -2.15 to 2.5.

In addition, in the present invention, the recovered valuable metals may consist of at least one or more of cobalt (Co), nickel (Ni), manganese (Mn), and lithium (Li).

In addition, in the present invention, the working part may include a first working part where a first internal temperature is created, a second working part having a second internal temperature at a lower side of the first working part, and a third working part having a third internal temperature at a lower side of the second working part, and when the first internal temperature, the second internal temperature, or the third internal temperature corresponds to at least one of a range of 500 to 600 °C, a range of 600 to 700 °C, a range of 700 to 800 °C, a range of 800 to 900 °C, and a range of 900 to 1,000 °C, the logarithmic value may belong to at least one range among a range of 0.45 to 2.50, a range of -0.20 to 2.15, a range of -0.90 to 1.85, a range of -1.55 to 1.60, and a range of -2.15 to 1.40.

In addition, the apparatus of the present invention may further include an input part feeding the objects to the working part, a heating part heating the objects inside the working part, and a discharge part withdrawing the objects from the working part, and the input part may include a movable partition part controlling connection of an inner space between the working part and the input part and a first gas discharge part discharging a predetermined gas input to the working part.

In addition, the heating part according to the present invention may include a first heating part, a second heating part located at a lower side of the first heating part, and a third heating part located at a lower side of the second heating part, and the first heating part, the second heating part, and the third heating part may be operated independently or together.

In addition, the discharge part may include a gas supply part inputting a predetermined gas to the working part, a

**EP 4 589 726 A1**

second gas discharge part ventilating an inner space of the discharge part, a second opening/closing part partitioning the inner space of the discharge part, and a cooling part cooling the objects input to the partitioned inner space.

[Advantageous Effects]

According to an embodiment of the present invention, heat treatment efficiency can be maximized by preventing carbon emission in a process of heat treatment of waste batteries and actively controlling a gas environment in which carbon monoxide and carbon dioxide are mixed.

Further, through the present invention that adopts a vertical existing pyrometallurgical method, mass treatment of objects is possible without performing pretreatment processes thereon, and the generation of harmful substances can be minimized.

Advantageous effects of the present invention are not limited to those mentioned above, and other unmentioned advantageous effects should be clearly understood by those of ordinary skill in the art based on the description below.

[Description of Drawings]

FIG. 1 is an overall view of an apparatus for recycling of waste batteries according to an embodiment of the present invention.

FIG. 2 is a cross-sectional view of the apparatus for recycling of waste batteries according to an embodiment of the present invention.

FIG. 3 is a cross-sectional view illustrating a working part and a discharge part according to an embodiment of the present invention.

FIG. 4 is a view illustrating a process of adjusting a partial pressure of a gas in the working part according to an embodiment of the present invention.

FIG. 5 is a cutout perspective view illustrating an insertion section part according to an embodiment of the present invention.

FIG. 6 is a view illustrating a storage part moving to its correct position due to a first guide part according to an embodiment of the present invention.

FIG. 7 is a cross-sectional view illustrating a first opening/closing part according to an embodiment of the present invention.

FIG. 8 is a cutout perspective view illustrating a standby section part according to an embodiment of the present invention.

FIG. 9 is a view illustrating objects after 30 minutes based on Comparative Example 1 of the present invention.

FIG. 10 is a view illustrating the objects after 40 minutes based on Comparative Example 1 of the present invention.

FIG. 11 is a view illustrating objects after 30 minutes based on Comparative Example 2 of the present invention.

FIG. 12 is a view illustrating the objects after 40 minutes based on Comparative Example 2 of the present invention.

FIG. 13 is a view illustrating objects after 30 minutes based on Example 1 of the present invention.

FIG. 14 is a view illustrating the objects after 40 minutes based on Example 1 of the present invention.

FIG. 15 is a view illustrating the storage part according to an embodiment of the present invention.

FIG. 16 is a view illustrating a storage part according to another embodiment of the present invention.

FIG. 17 is a view illustrating an embodiment of a mesh part according to the present invention.

FIG. 18 is a view illustrating a storage part having an upper end engaging part and a lower end engaging part formed thereon.

FIG. 19 is a view illustrating a storage part having a first contact part and a second contact part further formed thereon.

FIG. 20 is a view illustrating the storage part being fixed by a fixing part according to the present invention.

FIG. 21 is a view illustrating another embodiment of a storage part being fixed by a fixing part according to the present invention.

FIG. 22 is an overall view of a storage part according to an additional embodiment of the present invention.

FIG. 23 is a cutout perspective view of the storage part according to the additional embodiment of the present invention.

FIG. 24 is a cross-sectional view illustrating arrangement of a pair of storage parts in a vertical direction according to the additional embodiment of the present invention.

[Best Mode of the Invention]

Terms used herein are for describing embodiments and are not intended to limit the present invention. In the specification, a singular expression includes a plural expression unless the context clearly indicates otherwise. The terms "comprises" and/or "comprising" used herein do not preclude the presence or addition of one or more components other than those mentioned. Throughout the specification, the same reference numerals refer to the same components, and the term "and/or" includes any and all combinations of one or more of mentioned components. Although the terms "first," "second," etc., are used herein to describe various components, of course, the components are not limited by the terms. The terms are only used to distinguish one component from another component. Therefore, of course, a first component mentioned below could be termed a second component within the technical spirit of the present invention.

Unless defined otherwise, all terms including technical and scientific terms used herein may be used with meanings that may be commonly understood by those of ordinary skill in the art to which the present invention pertains. Also, terms defined in commonly used dictionaries should not be interpreted in an idealized or overly formal sense unless expressly so defined herein.

Spatially relative terms, such as "below," "beneath," "lower," "above," and "upper," may be used herein for ease of description to describe one component's relationship to other components as illustrated in the figures. The spatially relative terms should be understood as terms encompassing different orientations of components in use or operation in addition to the orientation depicted in the figures. For example, if the component illustrated in the figures is turned over, a component described as "below" or "beneath" another component would then be oriented "above" the other component. Thus, the illustrative term "below" can encompass an orientation of both above and below. The components may also be oriented in different directions, and accordingly, the spatially relative terms may be interpreted according to orientations.

Prior to detailed description of the present invention, "objects" are waste batteries and may be input while in an intact state or a partially ground state. In addition, "worker" is a person who performs a task of recycling waste batteries using an apparatus for recycling of waste batteries according to the present invention, but the present invention is not limited thereto, and "worker" may refer to a person close to the apparatus for recycling of waste batteries according to the present invention.

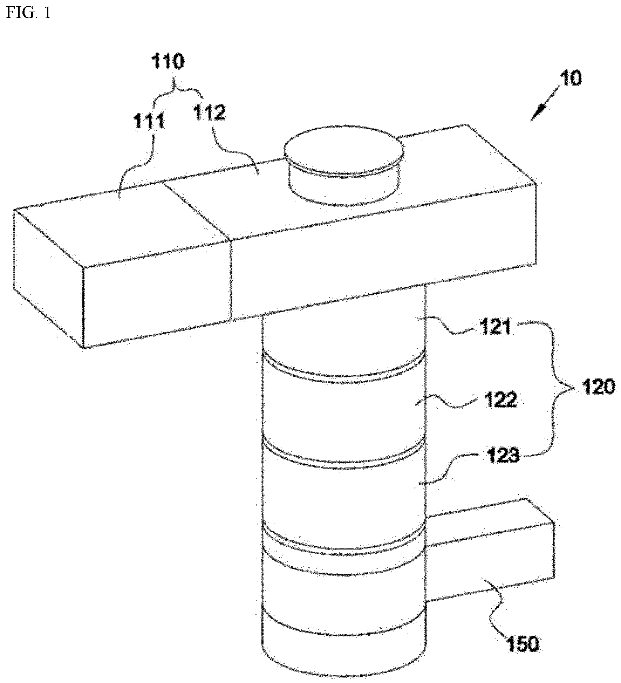

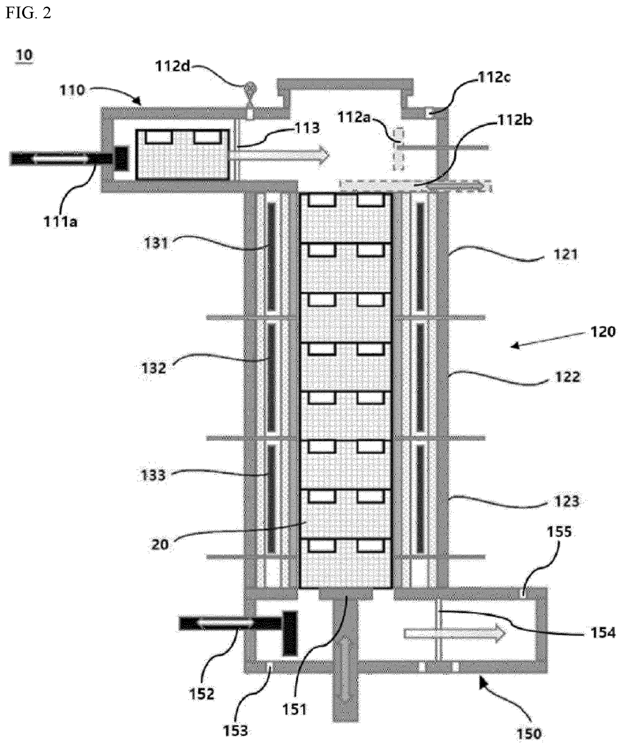

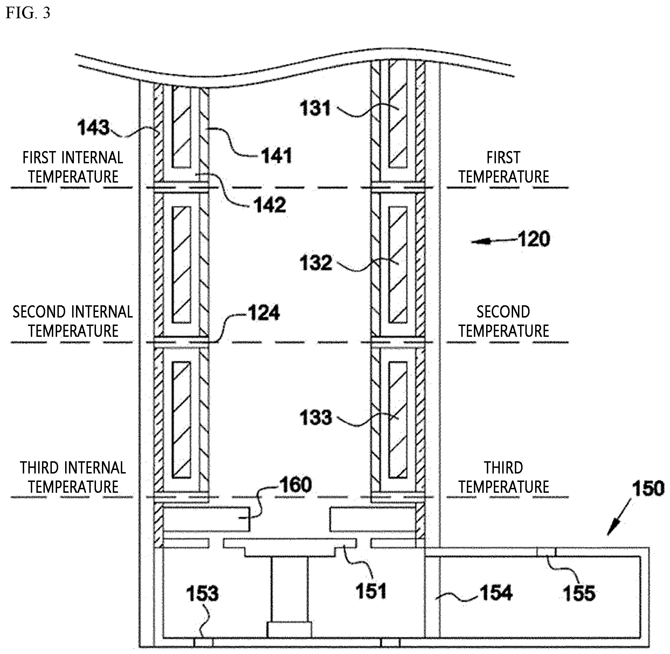

FIG. 1 is an overall view of an apparatus 10 for recycling of waste batteries according to an embodiment of the present invention, and FIG. 2 is a cross-sectional view of the apparatus for recycling of waste batteries according to an embodiment of the present invention. In addition, FIG. 3 is a cross-sectional view illustrating a working part and a discharge part according to an embodiment of the present invention.

The apparatus 10 for recycling of waste batteries according to the present invention is for heating a storage part 20 loaded with objects and obtaining necessary raw materials and includes an input part 110 waiting to input the storage part 20 to a working part, the working part where the storage part 20 is placed to perform the heating task, and a discharge part 150 withdrawing the storage part 20, for which a firing task is completed, from the working part.

The input part 110 includes an insertion section part 111 for inputting the storage part 20 thereto and a standby section part 112 where the input storage part 20 waits before being input to the working part.

The working part consists of a first working part 121, a second working part 122, and a third working part 123 that are disposed in a vertical direction.

The storage part 20 containing the objects is input into the working part through the input part 110, and in this process, arrangement into correct positions and an exhaust process may be performed to facilitate firing.

A vertical heating process is applied to the storage part 20 as the storage part 20 moves from the input part 110 to the working part while sequentially passing through the first working part 121, the second working part 122, and the third working part 123.

The heated storage part 20 moves from the working part to the discharge part 150, is processed through an input of a predetermined gas, is cooled through an input of a cooling gas, and is discharged to the outside.

In a process in which the objects, with which the storage part 20 is loaded, are processed using the above components, a controller controls operations of the input part 110 and the working part, and the control may be implemented in various ways such as adjusting a temperature increase rate in the working part, adjusting a partial pressure of a gas, and operating components in the input part 110 and the discharge part 150. Here, the controller may control at least one or more of a temperature increase rate and a temperature increase time of a heating part.

The input part 110 is a component connected to the working part to supply the storage part 20 thereto and includes the insertion section part, the standby section part, and a first opening/closing part.

Referring to FIG. 3, the working part is a component providing a space for heating the objects in a state in which the storage part 20 is disposed in the working part. To this end, the working part is formed in a cylindrical shape open in the vertical direction and induces the objects and the storage part 20 to be heated at once in a state in which the heating part, a fireproof part, and a temperature measurement part 124 are disposed in the working part. In addition, the working part consists of the first working part 121, the second working part 122, and the third working part 123 that are arranged in the vertical direction.

The first working part 121 provides a space for performing an initial heating process on the storage part 20 input from the standby section part 112. To this end, a first internal temperature is created in the first working part 121, the second working part 122 is disposed downward from the first working part 121, and the first working part 121 and the second working part 122 are connected to each other. Since the second working part 122 is located at a lower side of the first working part 121 and has a second internal temperature, the second working part 122 performs a process of secondarily heating the storage part 20. The second working part 122 is connected to each of the first working part 121 and the third working part 123. The third working part 123 is disposed at a lower side of the second working part 122, and a process of tertiarily heating the storage part 20 is performed at a third internal temperature.

In another embodiment of the present invention, the working part may further include a suspension part located downward from the third working part 123. The suspension part is a component for preventing unintended thermal deformation by temporarily suspending the objects and the storage part 20, which are heated through the first working part 121, the second working part 122, and the third working part 123. To this end, the suspension part is configured in the same form as the first working part 121, the second working part 122, and the third working part 123, but does not include the heating part which will be described below. Accordingly, natural cooling may be induced without performing additional heating of the objects and the storage part 20.

The heating part is a means installed in the working part to heat the objects and the storage part 20, and more specifically, is a component for melting the objects. To this end, the heating part may be made of a silicon carbide (SiC) heater capable of generating heat at high temperatures, but is not limited thereto. The heating part consists of a first heating part 131, a second heating part 132, and a third heating part 133 that are disposed in the first working part 121, the second working part 122, and the third working part 123, respectively. Here, the first heating part 131, the second heating part 132, and the third heating part 133 may operate independently or together by the controller, which will be described below, and may heat the objects and the storage part 20 at the first internal temperature, the second internal temperature, and the third internal temperature.

In still another embodiment of the present invention, at least one or more components among the first heating part 131, the second heating part 132, and the third heating part 133 may be configured as a plurality of heating parts disposed in circular arrangement about a central axis of the working part in the vertical direction. Accordingly, it is possible to save usage of the heating parts and create the first internal temperature, the second internal temperature, and the third internal temperature in a uniform manner. In addition, the first heating part 131, the second heating part 132, and the third heating part 133 may operate independently or together by the controller.

The fireproof part is a component for preventing deterioration of the heating part due to the objects heated inside the working part and preventing sharp changes in the internal temperatures. To this end, the fireproof part is disposed to surround the heating part or disposed close thereto. The fireproof part is provided for the first heating part 131, the second heating part 132, and the third heating part 133 and consists of a first fireproof part 141, a second fireproof part 142, and a third fireproof part 143 that are disposed at different positions.

The first fireproof part 141 is a component protecting the plurality of heating parts while disposed inward therefrom. Specifically, the first fireproof part 141 is located inward to face the central axis of the first working part 121, the second working part 122, and the third working part 123 for the first heating part 131, the second heating part 132, and the third heating part 133. That is, by being disposed to correspond to portions that are inward from the first heating part 131, the second heating part 132, and the third heating part 133, the first fireproof part 141 can prevent deterioration of the heating part due to foreign matter in the process of heating the objects.

The second fireproof part 142 performs the same role as the first fireproof part 141 described above but is disposed to surround the first heating part 131, the second heating part 132, and the third heating part 133. For example, in a case in which each of the first heating part 131, the second heating part 132, and the third heating part 133 has a circular arc-shaped cross-section, the second fireproof part 142 has a cross-sectional shape surrounding and accommodating the circular arc-shaped cross-section. Accordingly, the second fireproof part 142 can prevent deterioration due to radiant heat in addition to preventing deterioration due to foreign matter entering in all directions.

The third fireproof part 143 performs the same role as the first fireproof part 141 and the second fireproof part 142 described above but is disposed outward from the first heating part 131, the second heating part 132, and the third heating part 133. Accordingly, a horizontal cross-sectional arrangement structure is formed in which the first fireproof part 141, the heating part, the second fireproof part 142, and the third fireproof part 143 are sequentially disposed in order of proximity to the central axis of the working part.

The temperature measurement part 124 is a component that measures a temperature of the working part or the heating part and allows the controller, which will be described below, to control an internal temperature of the working part based on the measured temperature. To this end, the temperature measurement part 124 may be located inside the working part. Here, the temperature measurement part 124 is a separate temperature sensing means and may be installed by being coupled to a separate deterioration preventing means that is not damaged at high temperatures.

The temperature measurement part 124 is disposed between the first working part 121 and the second working part 122, between the second working part 122 and the third working part 123, and below the third working part 123. Accordingly, each temperature measurement part 124 may measure the internal temperature of one of the first working part 121, the second working part 122, and the third working part 123.

In yet another embodiment of the present invention, each temperature measurement part 124 may be installed in one of the first working part 121, the second working part 122, and the third working part 123 and may have the same installation point. That is, each temperature measurement part 124 installed in one of the first working part 121, the second working part 122, and the third working part 123 has the same horizontal distance from the central axis of the working part and has the same vertical separation distance from each other. Therefore, an occurrence of thermal measurement errors can be minimized in each temperature measurement part 124 measuring an internal temperature of the working part.

The discharge part 150 is a component for withdrawing the objects from the working part and is located downward from the working part. Accordingly, the input part 110, the working part, and the discharge part 150 have a vertical heating structure while connected to each other, and as compared to a conventional horizontal heating structure, the vertical heating structure has an effect of facilitating movement of objects and a gas necessary for heating the objects.

In addition, a gas for heating the objects is initially input to the discharge part 150, and the gas (predetermined gas) induces firing of the objects by moving upward and then is discharged by moving to the input part 110.

The discharge part 150 includes a vertical movement part 151 for withdrawing the objects, a second pressing moving part 152 pressing and moving the objects, a gas supply part 153 inputting a predetermined gas, a second opening/closing part 154 partitioning an inner space, a second gas discharge part 155 ventilating the space partitioned by the second opening/closing part 154, and a cooling part 156 cooling the objects.

The vertical movement part 151 is a component moving the positions of the objects from inside the working part to inside the discharge part 150 and moves the objects and the storage part 20 containing the objects in the vertical direction while supporting them in the vertical direction. To this end, the vertical movement part 151 may be configured as a multi-stage support means whose length is adjustable in the vertical direction using electricity or a hydraulic pressure, and an upper end of the vertical movement part 151 may be configured in the form of a plate for firmer contact with the storage part 20. After the storage part 20, into which the objects are input, is heated by the heating part inside the working part, the storage part 20 moves downward together with the vertical movement part 151.

The second pressing moving part 152 is a component moving sideward to press and move the objects and the storage part 20 containing the objects that are disposed in the inner space of the discharge part 150 and is provided in the same manner as a first pressing moving part 111a which will be described below.

The gas supply part 153 is a component inputting a predetermined gas for firing of the objects into the discharge part 150 and is configured as a separate input means including a pump for inducing movement of a fluid such as a gas, but is not limited thereto. Here, the predetermined gas is provided as at least one or more of carbon monoxide, carbon dioxide, and argon that can induce heat treatment of the objects and create an inert gas atmosphere.

The second opening/closing part 154 is a component for dividing the inner space of the discharge part 150 into two or more portions to allow each portion of the inner space to be used for different purposes such as suspension of the storage part 20 and cooling of the storage part 20, and the second opening/closing part 154 has the same configuration as a first opening/closing part 113 which will be described below.

By the second opening/closing part 154 being closed, the inner space of the discharge part 150 may be divided into a suspension space connected to an inner space of the working part and a posttreatment space disconnected from the working part. The gas supply part 153 described above may be formed to correspond to the suspension space, and the second gas discharge part 155 and the cooling part 156 may be disposed in the posttreatment space.

The second gas discharge part 155 is a component ventilating at least one or more portions of the partitioned inner space of the discharge part 150 and may be configured as a discharge module including a discharge pump, but is not limited thereto. When the second opening/closing part 154 descried above is opened, the second gas discharge part 155 may ventilate the entire inner space of the discharge part 150. In addition, when the second opening/closing part 154 is closed, the second gas discharge part 155 may ventilate only an inner space of the posttreatment space.

The cooling part 156 is a component cooling the objects and the storage part 20 disposed in the posttreatment space and may be configured as a spraying means capable of spraying a gas having a predetermined temperature and may cool the objects and the storage part 20 in an air-cooling manner to prevent damage such as unintentional cracks therein. Here, the predetermined temperature may range from 50 °C to 100 °C and may be configured as a temperature that decreases by 10 °C every hour, but is not limited thereto.

A space into which a fixing part 160 can be inserted is secured between upper and lower storage parts 20. The fixing part 160 prevents unintentional changes in vertical positions of the storage parts 20 that contain objects and are heated together with the objects. To this end, the fixing part 160 is configured in the form of a plate that is located downward from the storage part 20 and has an upper surface coming into contact with a lower surface of the storage part 20 inside the working part. In addition, for more firmly fixing the height of the storage part 20, the fixing part 160 may be provided as a plurality of fixing parts 160, and the plurality of fixing parts 160 may be disposed in circular arrangement about the central axis of the working part.

By being further provided and disposed upward from the storage part 20, the fixing part 160 may induce the height of another storage part 20 located upward therefrom to be fixed. In order to further facilitate an input of a predetermined gas and create an air circulation structure inside the storage part 20, an insertion plate part 161 is further included, and the insertion plate part 161 includes a first inlet hole 161a, a second inlet hole 161b, and an auxiliary fixing part 161c. These will be described in more detail below.

The controller may control an operation of the heating part and may control the internal temperature of the working part while connected to the temperature measurement part 124 measuring the temperature of the heating part and/or the firing space inside the working part.

The temperature measurement part 124 located inside the working part measures a first temperature, a second temperature, and a third temperature that correspond to the first working part 121, the second working part 122, and the third working part 123, respectively, and the controller compares the measured first temperature, second temperature, and third temperature with the predetermined first internal temperature, second internal temperature, and third internal temperature.

First, the controller compares the second temperature and the second internal temperature and controls an operation of the second heating part 132 based on a comparison result. Specifically, the controller 170 detects a temperature at a specific point in time and a temperature change amount of the second temperature and controls the operation of the second heating part 132.

When the second temperature is higher than or equal to the second internal temperature, the controller controls the operation of the second heating part 132 so that the temperature inside the second working part increases at the optimal temperature increase rate.

In a case in which a change amount of the second temperature is lower than a preset temperature increase rate, the controller controls the second heating part 132 to heat the objects so that the temperature inside the firing space increases at a predetermined temperature increase rate or higher.

When the second temperature is lower than the second internal temperature, the controller calculates a temperature increase rate of the second working part 122 and controls the operation of the second heating part 132 so that the calculated temperature increase rate matches the optimal temperature increase rate. Here, by operating the second heating part 132 so that the temperature increase rate of the second working part 122 is higher than the optimal temperature increase rate for a predetermined amount of time (e.g., 10 seconds), and then controlling the temperature increase rate of the second working part 122 to match the optimal temperature increase rate, crack formation in the objects and reduction of the objects can be more easily induced.

After controlling the operation of the second heating part 132 according to comparison between the second temperature and the second internal temperature as described above, the controller may control an operation of the first heating part 131 in the same manner based on a result of comparing the first temperature and the first internal temperature, and then may control an operation of the third heating part 133 in the same manner based on a result of comparing the third temperature and the third internal temperature.

The reason for controlling the internal temperature relating to the second working part 122 first among the first working part 121, the second working part 122, and the third working part 123 is to first maximize the thermal efficiency of the second working part 122 where the objects actually begin to be heated and reduced.

When the need for preheating the objects is high, the first heating part 131 may be controlled after adjusting the internal temperature of the second working part 122, and when the need for reduction of the objects is higher, the third heating part 133 may be controlled first after controlling the second heating part 132. That is, an order of controlling the first heating part 131 and the third heating part 133 may vary according to the amount of input objects and the type of input objects.

By controlling the operation of each heating part based on the temperature measured for each of the first working part 121, the second working part 122, and the third working part 123, a decrease in thermal efficiency for the objects can be prevented.

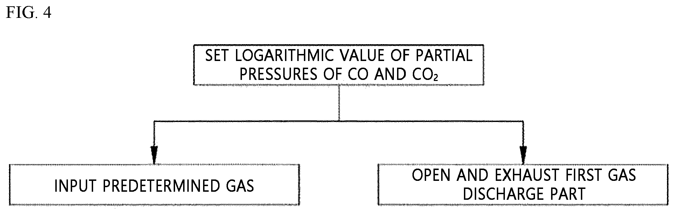

FIG. 4 is a view illustrating a process of adjusting a partial pressure of a gas in the working part according to an embodiment of the present invention.

The controller creates and controls a work environment of the working part in a process of heating the objects and recovering valuable metals consisting of at least one or more of cobalt (Co), nickel (Ni), manganese (Mn), and lithium (Li). Specifically, the controller controls an operation of the gas supply part 153 described above and induces a predetermined gas to be input into the discharge part 150. Then, the predetermined gas moves along the working part located upward from the discharge part 150, comes into contact with the objects in the movement process, and creates a reducing gas atmosphere.

The working part including the first working part 121, the second working part 122, and the third working part 123 heat-treats the objects under a predetermined mixed reducing gas atmosphere, and the predetermined mixed reducing gas atmosphere is determined according to partial pressures of carbon dioxide and carbon monoxide contained in the predetermined gas. Here, when carbon monoxide is generated in a process of heat treatment on the objects, the generated carbon monoxide may be reflected in setting a partial pressure in the working part.

Here, the controller may input the predetermined gas through the gas supply part 153 or may exhaust the predetermined gas through the first gas discharge part 112c so that log(PCO2/PCO), which is a logarithmic value of a division value of the partial pressure of carbon monoxide and the partial pressure of carbon dioxide, ranges from -2.15 to 2.5. Specifically, the logarithmic value (log(PCO2/PCO)) based on the division value of the partial pressure between carbon monoxide and carbon dioxide belongs to the range of -2.15 to 2.5, and the logarithmic value is adjusted to decrease with an increase in the internal temperature of the working part.

When the first internal temperature, the second internal temperature, and the third internal temperature corresponding to the first working part 121, the second working part 122, and the third working part 123, respectively, correspond to at least one of a range of 500 to 600 °C, a range of 600 to 700 °C, a range of 700 to 800 °C, a range of 800 to 900 °C, and a range of 900 to 1,000 °C, the controller controls additional input or discharge of the predetermined gas through the input part 110 and the first gas discharge part 112c so that the logarithmic value described above belongs to at least one range among a range of 0.45 to 2.50, a range of -0.20 to 2.15, a range of -0.90 to 1.85, a range of -1.55 to 1.60, and a range of -2.15 to 1.40.

For example, the controller may suppress carbon generation by adjusting an amount of input carbon dioxide contained in the predetermined gas to not be small in the process of heat-treating the objects and may shorten a heat treatment process time by adjusting the input amount to not be excessive.

When the amount of input predetermined gas is excessive, the controller may open the first gas discharge part 112c formed in the input part 110 and exhaust the predetermined gas. In order to first minimize pressure gradient, which may occur in the process of exhausting the predetermined gas, for the inner space of the input part 110, an exhaust process inside the input part 110 by a pressure maintaining part 112d may precede or be performed in parallel.

In addition, the present invention may include a method including pretreating waste lithium-ion batteries provided as objects, performing first heat treatment, separating valuable metals, and performing second heat treatment.

The pretreating of the objects is performed for the purpose of preventing explosion of the waste batteries, making the waste batteries harmless, or removing foreign matter, such as outer cans, therefrom. For example, since used waste batteries are each made of a closed system and contain substances such as electrolytes, there is a risk of explosion when the waste batteries are ground. Accordingly, through discharge treatment of and electrolyte removal from waste batteries provided as objects, process safety can be increased, and a recovery rate of valuable metals such as copper, nickel, and cobalt can be increased. The discharge treatment can be performed by submerging the waste batteries in an aqueous solution containing alkali metal or alkaline earth metal ions, and the type of the aqueous solution is not limited thereto.

In order to increase the recovery rate of valuable metals, a grinding process may be performed on the waste batteries as necessary. Specifically, in a grinding method, cutting and grinding may be performed by utilizing a conventional grinding means such as a cutter mixer, but the grinding method is not limited thereto.

Then, the first heat treatment may be performed on the objects by the objects being input into a working part 120 through the input part 110 while held in a storage part, which will be described below. The working part 120 being used is not particularly limited as long as the working part 120 has an input path formed at one side and a discharge path provided at the other side, and the working part 120 may have a vertical form in which input and discharge are possible in the vertical direction or may be configured as a working part having another connection form. A heat source may be a gas burner, a coal burner, a resistance heater, an infrared (IR) lamp, etc., but is not limited thereto. Meanwhile, after the first heat treatment is completed, the storage part may include objects consisting of Me(M=Co or Ni, or Mn) or MeO(M=Co or Ni, or Mn), and $Li_2CO_3$, $LiAlO_2$, graphite(C), aluminum (Al), copper (Cu), etc.

A predetermined gas (mixed gas) is input into the working part 120 in the first heat treatment process, and in this way, the heat treatment may be performed under a mixed gas atmosphere of carbon monoxide and carbon dioxide. A temperature in the heat treatment process is determined according to the type and form of batteries, and log(PCO2/PCO) may be adjusted to decrease with an increase in the heat treatment temperature in the heat treatment step. For example, pouch type waste batteries including lithium nickel cobalt manganese oxide or lithium cobalt oxide as a positive electrode active material may be heat-treated at a temperature ranging from 650 to 850 °C, and at this time, the heat treatment may be performed under a mixed reducing gas atmosphere of carbon dioxide and carbon monoxide in which log(PCO2/PCO) is adjusted to have a value ranging from -1.20 to 2.00.

In addition, when the heat treatment temperature is in a range of 500 to 600 °C, a range of 600 to 700 °C, a range of 700 to 800 °C, a range of 800 to 900 °C, or a range of 900 to 1,000 °C, log(PCO2/PCO) may be adjusted to have a value within a range of 0.45 to 2.50, a range of -0.20 to 2.15, a range of -0.90 to 1.85, a range of -1.55 to 1.60, or a range of -2.15 to 1.40 (refer to Table 1). In this way, the time taken for the heat treatment process can be reduced while suppressing generation of carbon due to inputting the mixed gas and performing the heat treatment.

[Table 1]

| | | Temperature(°C) | | | | | | | | | | |
|---|---|---|---|---|---|---|---|---|---|---|---|---|
| | | 500 | 550 | 600 | 650 | 700 | 750 | 800 | 850 | 900 | 950 | 1000 |
| $\log(\frac{P_{co_2}}{P_{co}})$ | Max | 2.50 | 2.30 | 2.12 | 1.97 | 1.83 | 1.70 | 1.58 | 1.48 | 1.38 | 1.29 | 1.21 |
| | Min | 1.20 | 0.83 | 0.49 | 0.16 | -0.17 | -0.51 | -0.86 | -1.20 | -1.53 | -1.83 | -2.11 |

<Maximum values and minimum values of log(PCO2/PCO) according to heat treatment temperatures>

After the end of the first heat treatment, the second heat treatment may be performed to remove residual carbon. Here, the internal temperature of the working part 120 is controller so that a temperature environment of 700 °C or higher is provided. In this way, carbon that may remain can be easily removed, and carbon monoxide that may be formed can be utilized in the first heat treatment. After the second heat treatment, the objects may consist of Me(M=Co or Ni, or Mn) or MeO(M=Co or Ni, or Mn), and $Li_2CO_3$, $LiAlO_2$, Al, Cu, etc.

After the end of the first heat treatment and the second heat treatment described above, valuable metals may be recovered corresponding to physical properties of the objects. Objects made of magnetic metal are sorted and separated using a magnetic field, and ash is classified by particle size by sieving using an airflow type sieving device, the centrifugal principle, vibration, etc. Additionally, $Li_2CO_3$ and $LiAlO_2$, which are Li-enriched phases, can be recovered by a leaching process using water or acid, and the separation process can be performed before or after the second heat treatment to suit the purpose. That is, valuable metals can be separated and obtained through at least one or more of a separation process by sieving, a separation process by magnetism, and a separation process by leaching with acid or water.

Through the series of methods described above, valuable metals can be recovered in four different groups, such as an alloy-type metal containing at least one or more of magnetic nickel, cobalt, and manganese, a non-magnetic Al alloy when the outer can (case) of the waste battery is aluminum, lithium carbonate, MnO, and $LiAlO_2$ recovered by utilizing a water leaching technique, and residual carbon that is not oxidized in the second heat treatment process.

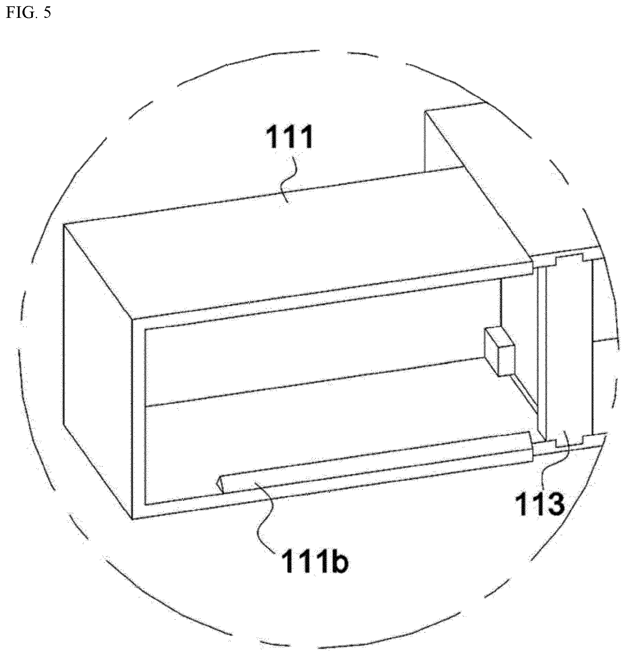

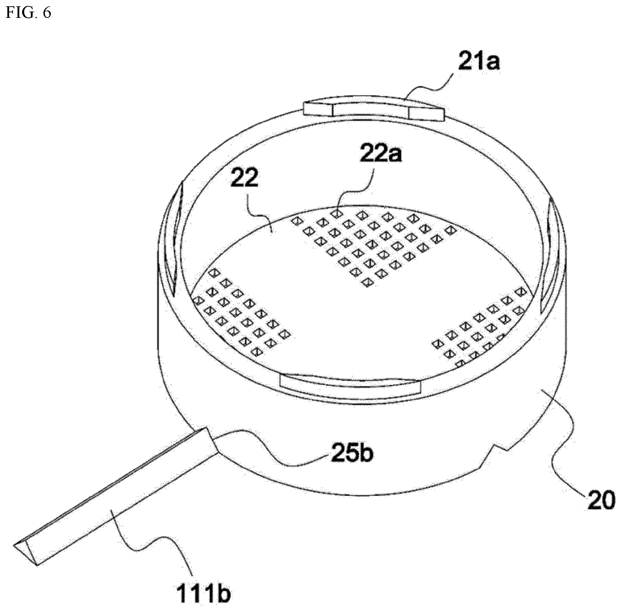

FIG. 5 is a cutout perspective view illustrating an insertion section part according to an embodiment of the present invention, FIG. 6 is a view illustrating a storage part moving to its correct position due to a first guide part according to an embodiment of the present invention, and in FIG. 5, the first pressing moving part 111a is omitted.

The insertion section part 111 provides a space for moving the storage part 20 closer to the working part. To this end, the insertion section part 111 includes the first pressing moving part 111a pressing and moving the storage part 20 and the first guide part 111b guiding the storage part 20 to its correct position, and the insertion section part 111 is provided in the form of a box that is connected to the standby section part 112 through opening/closing of the first opening/closing part 113.

The first pressing moving part 111a is a component moving the storage part 20 and moves the storage part 20, whose position has been moved from the outside of the input part 110 to the inside thereof, closer to the working part. Here, the movement of the storage part 20 is performed through a push of the first pressing moving part 111a. To this end, the first pressing moving part 111a may be provided as a hydraulic or electric pusher that receives a driving force from a separate driving means and has an end pressing and moving a tubular part, but is not limited thereto. In order to facilitate pressing and moving of the storage part 20, the first pressing moving part 111a may be configured to be close to the working part outside the insertion section part 111.

The first guide part 111b provides a path for more accurate movement guide in a process in which the storage part 20 moves due to the first pressing moving part 111a. To this end, the first guide part 111b is formed inside the insertion section part 111, is formed to protrude upward from a lower surface of the insertion section part 111, and is formed in a longitudinal direction to face the standby section part 112 and the working part.

The first guide part 111b is formed to be insertable into a lower end guide groove 25b formed in a body part 21 which will be described below. Specifically, a cross-sectional shape of the first guide part 111b is formed to be engageable with a cross-sectional shape of the lower end guide groove 25b. In this way, in a case in which the first guide part 111b is engaged with the lower end guide groove 25b, the storage part 20 can move in the longitudinal direction of the first guide part 111b.

In yet another embodiment of the present invention, the first guide part 111b may be configured in the form of a wedge having a triangular cross-section. In this way, it is possible to more easily guide movement of the storage part 20, and the storage part 20 can be prevented from being detached from the first guide part 111b in the guide process. Meanwhile, a second guide part 112b-1 having the same form as the first guide part 111b may be disposed upward from a movable partition part 112b located inside the standby section part 112.

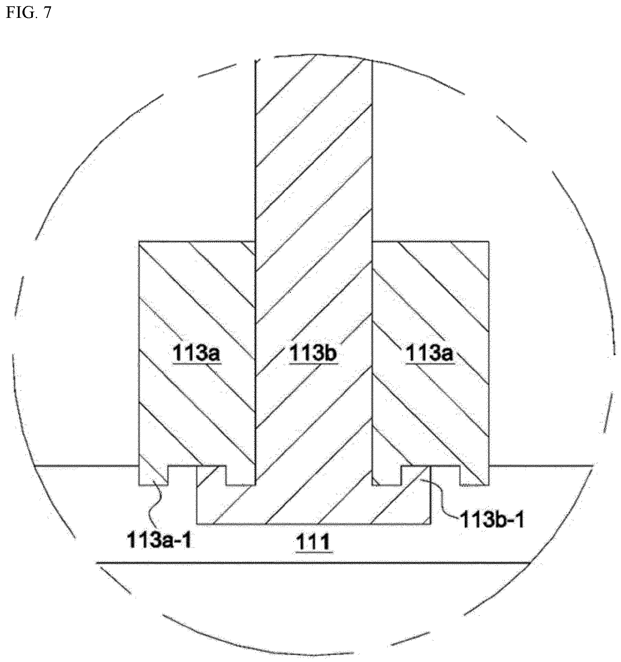

FIG. 7 is a cross-sectional view illustrating a first opening/closing part according to an embodiment of the present invention and illustrates a lower portion of the first opening/closing part 113.

The first opening/closing part 113 is formed in the insertion section part 111 and is located between the insertion section part 111 and the standby section part 112 to selectively open and connect the insertion section part 111 and the standby section part 112 and selectively allow movement of the storage part 20. To this end, the first opening/closing part 113 is provided in the form of a door and is opened/closed by sliding.

A fixing frame 113a is a component that serves as a door frame, maintains a fixed state, and induces sliding of a door part 113b. To this end, the fixing frame 113a is installed on an upper surface and a lower surface of the insertion section part 111. In addition, a pair of first protruding insertion parts 113a-1, formed on an upper surface or a lower surface of the fixing frame 113a, are disposed to be inserted into the upper surface or the lower surface of the insertion section part 111, and in this way, the fixed state of the fixing frame 113a is maintained.

Since the pair of fixing frames 113a are provided to come into contact with both surfaces of the door part 113b, the door part 113b is able to slide while fitted to the pair of fixing frames 113a. The first protruding insertion parts 113a-1 and the door part 113b may be engaged in a form of being fitted. That is, due to the pair of first protruding insertion parts 113a-1, the fixing frames 113a, the insertion section part 111, and the door part 113b are engaged with each other. Here, since the insertion section part 111 and the fixing frames 113a are fixed, only the door part 113b slides selectively.

The door part 113b is a component fitted to the upper and lower surfaces of the insertion section part 111 and opened/closed and is provided as a pair of slidable opening/closing means. To this end, the door part 113b has an upper end and a lower end inserted into the upper and lower surfaces, respectively, of the insertion section part 111, and simultaneously, the door part 113b is located between the pair of fixing frames 113a described above.

The door part 113b having second protruding insertion parts 113b-1 each formed to be curved or bent on one of an upper end and a lower end is configured in a trident-like form, and the second protruding insertion parts 113b-1 are engaged to come in surface contact with the first protruding insertion parts 113a-1. Accordingly, the door part 113b may slide while interposed between the insertion section part 111 and the fixing frames 113a. Meanwhile, the door part 113b described above may be configured as a pair of door parts 113b that are provided to touch each other or may be configured as a single door part 113b that is opened/closed by sliding.

A contact maintaining part 113b-2 is a component for, when a pair of door parts 113b are provided, maintaining airtightness between the door parts 113b. To this end, the contact maintaining part 113b-2 may be formed on each of the pair of door parts 113b by being formed on surfaces thereof facing each other and may be formed to have a thickness that is larger than a thickness of the door part 113b.

In yet another embodiment of the present invention, the pair of contact maintaining parts 113b-2 may have structures engaged with each other in an angular S-like shape. Accordingly, through more surface contact between the contact maintaining parts 113b-2, the airtightness of inner spaces of the insertion section part 111 and the standby section part 112 can be more firmly and easily maintained.

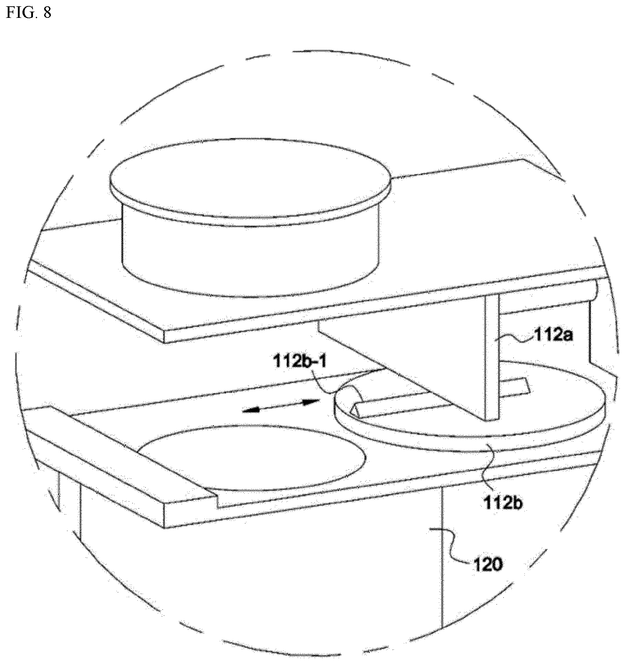

FIG. 8 is a cutout perspective view illustrating a standby section part according to an embodiment of the present invention in which the insertion section part 111 and the first opening/closing part 113, which are connected to the standby section part 112, are omitted.

The standby section part 112 is a component provided for the storage part 20 to wait before being input and provides a space in which an exhaust process for preventing an input of foreign matter is performed while sequential inputs of storage parts 20 are induced after the storage parts 20 are arranged into correct positions. To this end, the standby section part 112 includes a stopper 112a limiting movement of the storage part 20 and the movable partition part 112b controlling connection between the input part 110 and the working part. In addition, the standby section part 112 further includes a first gas discharge part 112c and a pressure maintaining part 112d for discharging a predetermined gas input for heating the objects and the storage parts 20.

The stopper 112a limits further movement of the storage part 20 that is guided to move to the working part by the first pressing moving part 111a and the first guide part 111b. To this end, the stopper 112a is provided in the form of a plate connected to a separate stretchable means having elasticity. As the storage part 20, whose movement is guided, comes into contact with the stopper 112a inside the standby section part 112, unintentional further movement of the storage part 20 can be prevented. To this end, preferably, a front surface of the stopper 112a may be disposed to correspond to a direction directly above from the working part.

In yet another embodiment of the present invention, a damage preventing part may be further provided on the front surface of the stopper 112a that comes into contact with the storage part 20. The damage preventing part is a component that has a restoration force and absorbs impact generated from the storage part 20. In this way, the stopper 112a or the storage part 20 can be prevented from being damaged in a collision process.

The movable partition part 112b is provided to, through opening/closing, control connection between inner spaces of the input part 110 and the working part. To this end, the movable partition part 112b is provided in a form corresponding to an open upper surface of the working part and reciprocates along a separate rail part formed on a lower surface inside the standby section part 112. In addition, the movable partition part 112b has a structure that is spaced from the stopper 112a in the vertical direction to not come into contact with the stopper 112a in a process in which the movable partition part 112b slides. Here, the movable partition part 112b may have a circular cross-section that corresponds to the open upper surface of the working part, but the movable partition part 112b is not limited thereto and may have various other cross-sectional shapes such as a quadrangular cross-section and a polygonal cross-section.

When the movable partition part 112b is located right above the working part and the standby section part 112 and the working part are disconnected from each other, the storage part 20 is not input into the working part, and a firing process for the storage part 20 is not performed.

On the other hand, when the movable partition part 112b located right above the working part slides, the inner spaces of the standby section part 112 and the working part are connected to each other. Accordingly, the storage part 20, which is pressed and moved from the insertion section part 111 toward the standby section part 112, may move downward from right above the working part and may be input into the working part.

The second guide part 112b-1 is a component providing a path for the storage part 20, whose input to the working part is limited by the movable partition part 112b, to maintain its correct position, is provided in the same form as the first guide part 111b described above, and is formed on an upper surface of the movable partition part 112b. Here, preferably, longitudinal directions of the first guide part 111b and the second guide part 112b-1 may be provided to be the same as each other.

In a state in which the movable partition part 112b is located right above the working part, further movement of the storage part 20 is limited by the stopper 112a, and the storage part 20 is located right above the working part in a state in which the second guide part 112b-1 prevents distortion of an angle of the storage part 20. Then, when the movable partition part 112b slides and deviates from right above the working part, the storage part 20 moves downward due to gravity and is input into the working part. In this way, even in a state in which worker intervention is minimized, arrangement and input of the storage part 20 toward the working part are possible.

The first gas discharge part 112c is provided to ventilate the inner space of the standby section part 112 and may automatically exhaust air inside the standby section part 112 as air outside the standby section part 112 enters according to an operation of a separate air blowing means. Here, in a state in which the first opening/closing part is open, air inside the insertion section part 111 may also be exhausted by the first gas discharge part.

The standby section part 112 according to the present invention further includes the pressure maintaining part 112d. The pressure maintaining part 112d is a component that performs the same role as the first gas discharge part 112c described above and discharges air inside the input part 110 in association with the controller to prevent an excessive increase or decrease of an internal pressure. To this end, the pressure maintaining part 112d may be provided as a globe valve, a ball valve, a gate valve, etc., that is opened or closed by being connected to the controller.

The controller according to the present invention controls at least one or more of the temperature increase rate and the temperature increase time of the heating part to induce activation of a phenomenon of cracks that segment the objects.

Information relating to a predetermined temperature increase rate is prestored in the controller, and the controller controls an increase rate relating to the temperature of the heating part based on the temperature increase rate-related information. Here, the temperature increase rate of the working part can be confirmed through Comparative Examples 1 and 2 and Example 1 below. In addition, an amount of input objects, a type of input objects, a method of heating objects, a temperature increase time, and an analysis method for measuring an optimal temperature increase rate of a firing space inside the working part are the same, and the temperature increase rate is varied to compare the degree of reduction of objects.

According to an embodiment, the heating part may be controlled so that the temperature inside the working part increases to a target operating temperature at a predetermined temperature increase rate or higher. In addition, it can be confirmed that the crack formation becomes active and reduction occurs actively after a certain period of time passes after the temperature inside the working part reaches the target operating temperature.

Comparative Example 1

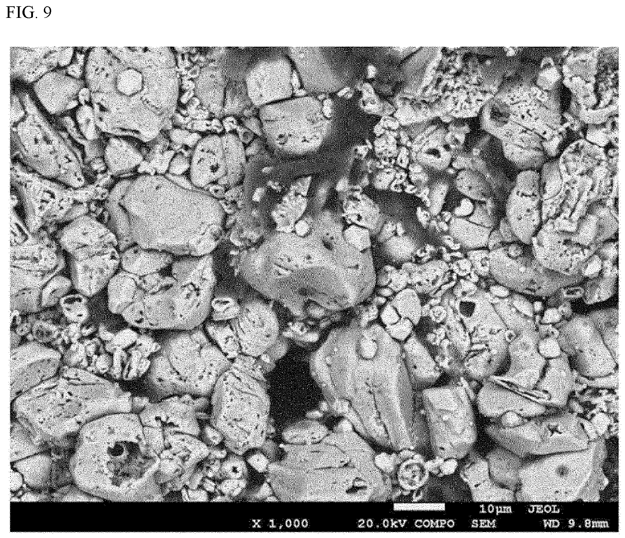

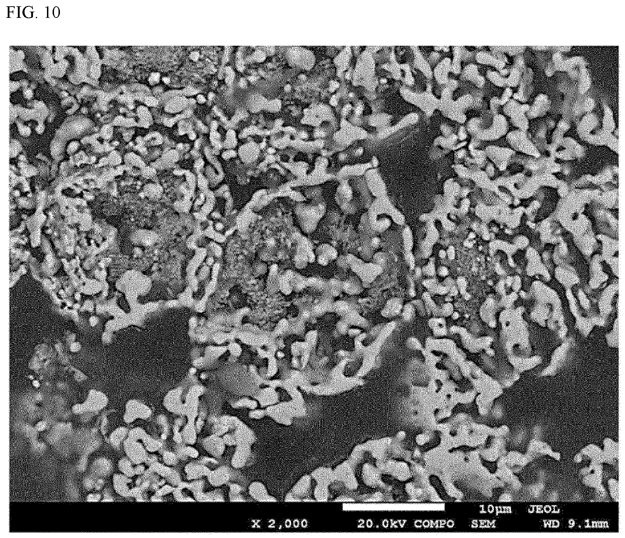

After inputting objects into the working part, the objects were heated by controlling the heating part for the temperature increase rate to be 20 K/min in relation to the operating environment inside the working part, and 30 minutes and 40 minutes after the start of heating the objects, samples were recovered from the objects, and scanning electron microscope (SEM)-backscattered electron (BSE) analysis was performed. Analysis results of Comparative Example 1 are shown in FIGS. 9 and 10. Here, the operating temperature for recycling of objects was set to 850 °C, and this was the same for both Comparative Example 2 and Example 1.

30 minutes after the temperature inside the working part reached the operating temperature, 850 °C, at the temperature increase rate of 20 K/min, the degree of cracks in the objects was insignificant as shown in FIG. 9 in an environment in which the temperature increase rate was 20 K/min. Corresponding thereto, it can be confirmed that the degree of reduction of the objects was also insignificant after 40 minutes as shown in FIG. 10.

Comparative Example 2

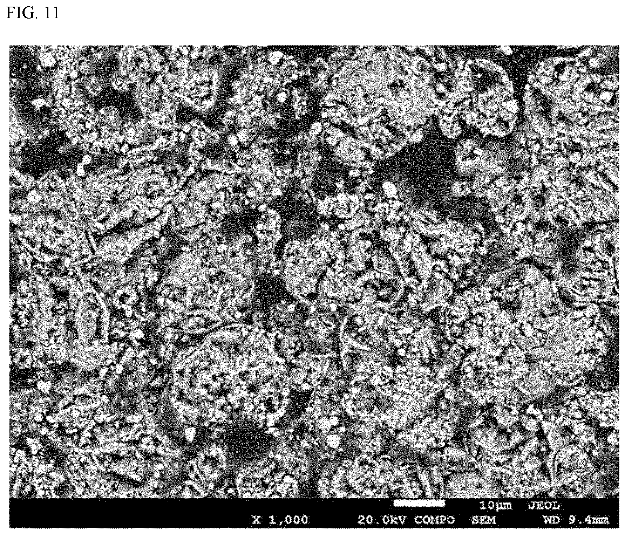

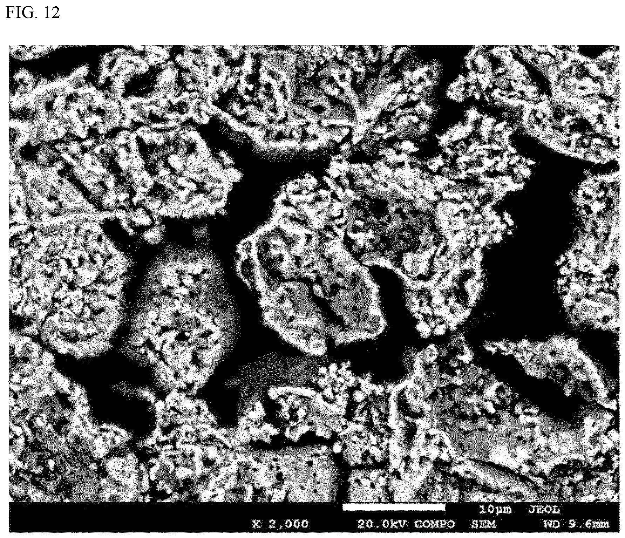

After inputting objects into the working part, the objects were heated by controlling the heating part for the temperature increase rate to be 30 K/min in relation to the operating environment inside the working part, and 30 minutes and 40 minutes after the start of heating the objects, samples were recovered from the objects, and SEM-BSE analysis was performed. Analysis results of Comparative Example 2 are shown in FIGS. 11 and 12.

30 minutes after the temperature of the objects increased to the operating temperature, 850 °C, it can be confirmed that more cracks were formed in the objects compared to Comparative Example 1 as shown in FIG. 11, and it can be confirmed that more reduction of the objects occurred after 40 minutes as shown in FIG. 12.

In this way, it can be confirmed that when the objects are heated at a higher temperature increase rate compared to Comparative Example 1, the objects need to be sufficiently broken for a predetermined gas consisting of a reducing gas to be input into the objects.

Example 1

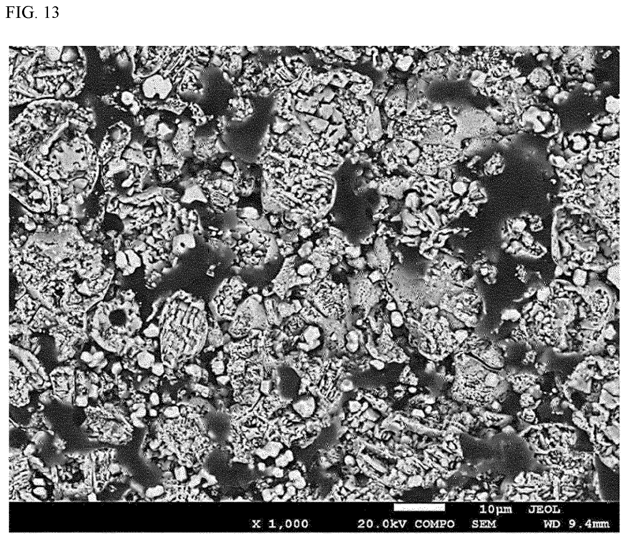

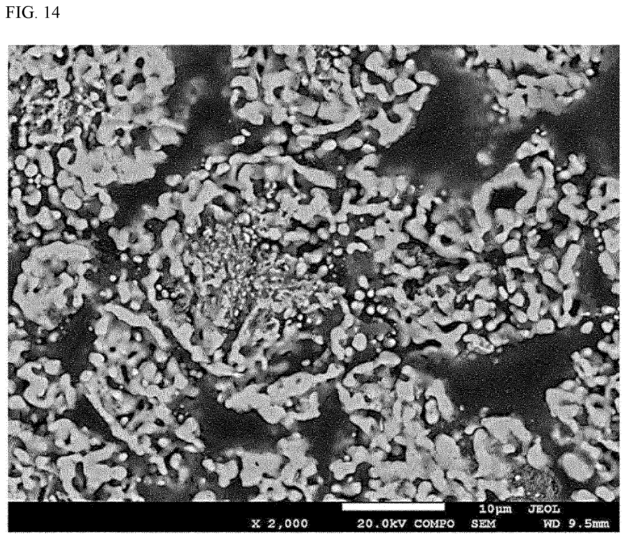

After inputting objects into the working part, the objects were heated by controlling the heating part for the temperature increase rate to be 22 K/min in relation to the operating environment inside the working part, and 30 minutes and 40 minutes after the temperature increased to the target operating temperature, samples were recovered from the objects, SEM-BSE analysis was performed, and analysis results relating thereto are shown in FIGS. 13 and 14.

Referring to FIG. 13, it can be confirmed that more cracks were formed in the objects compared to Comparative Example 1, but the degree of crack formation was not much different compared to Comparative Example 2. In addition, referring to FIG. 14, it can be confirmed that more reduction of the objects occurred as compared to Comparative Example 1, but the degree of reduction was not much different compared to Comparative Example 2.

In this way, it can be confirmed that an optimal temperature increase rate for the objects is configured to be 22 K/min or higher. It can be confirmed that, while a recovery rate of cobalt that may be recovered from the objects was 70% in Comparative Example 1, the recovery rate of cobalt was 95% in Example 1.

The controller may, by controlling the heating part so that the temperature of the working part increases for a temperature increase time based on the above optimal temperature increase rate, induce reduction to easily occur by a predetermined gas permeating into the objects.

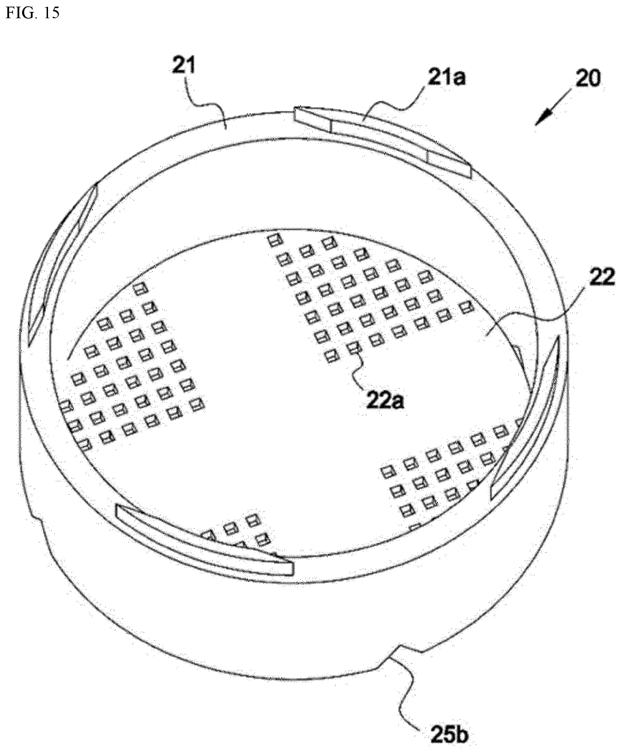

FIGS. 15 to 24 are views relating to the storage part 20, various embodiments may be configured according to configurations formed in the storage part 20, and different embodiments may be freely combined.

FIG. 15 is a view illustrating the storage part 20 according to an embodiment of the present invention.

The storage part 20 is a component that induces processing, such as heating, to be more easily performed in a state in which objects are stored in the storage part 20, and to this end, the storage part 20 is configured in a form with an open upper surface. More specifically, the storage part 20 has an exterior in the form of a circular frame and has a space in which objects may be placed.

Since the storage part 20 has a circular rim shape, as compared to a conventional saggar having a polygonal rim shape such as a quadrangular rim shape, it is possible to address a problem in which heat is not applied to a vertex portion where two surface portions come into contact.

The body part 21 is a component for collecting objects and is formed in the shape of a circular frame. Accordingly, a mesh part 22 and an inner space in which objects may be placed are created, and objects input from above are heated together with the body part 21 in a state in which lower surfaces of the objects are loaded inside the body part 21. In addition, a plurality of first through-holes 21c are formed in the body part 21, and the plurality of first through-holes 21c are configured to have circular arrangement about a central axis of the body part 21.

A first coupling part 21a and a second coupling part 21b are formed on an upper side and a lower side, respectively, of the body part 21 and are provided for engagement with another body part 21 located above or below. To this end, the first coupling part 21a is formed in an embossed manner by protruding from an upper surface of the body part 21, and the second coupling part 21b is formed in an engraved manner in a lower surface of the body part 21 and corresponds to the size and form of the first coupling part 21a. However, even when the first coupling part 21a and the second coupling part 21b are coupled, the space into which the fixing part 160 can be inserted is secured between the upper and lower storage parts 20 coupled to each other. Meanwhile, the body part 21 may not have the second coupling part 21b.

In yet another embodiment of the present invention, the first coupling part 21a may have an aggregate structure in which wedges having a peak facing upward are arranged along the circumference of the body part 21. That is, by being provided in the form of a sawtooth, the first coupling part 21a can maximize a binding strength between a pair of body parts 21 disposed in the vertical direction.

The mesh part 22 is provided for the purpose of having higher heating efficiency in the process of heating the objects. To this end, the mesh part 22 is located inward from the body part 21 and is configured in the form of mesh that is formed to be open in a lattice form.

In addition, the mesh part 22 is configured in the form of a plate and may have a plurality of through-holes (second through-holes 22a) formed therein. In this way, there is an effect of increasing the stability of arrangement of the objects.

The lower end guide groove 25b that may identically apply to all embodiments according to the present invention is a component devised to enable movement of the storage part 20 in the horizontal direction in a state in which the storage part 20 is disposed at its correct position, and the lower end guide groove 25b is located downward from the storage part 20. In addition, the lower end guide groove 25b is formed to correspond to the size and shape of the first guide part 111b and the second guide part 112b-1, which will be described below, and is formed to pass through the body part 21.

In yet another embodiment of the present invention, two or more lower end guide grooves 25b may be formed in an engraved manner in the body part 21 in a plurality of directions. For example, as in FIG. 15, lower end guide grooves 25b may be formed in four different directions. The storage part 20 including the lower end guide grooves 25b may be guided to rotate corresponding to the position and direction of the first guide part 111b or the second guide part 112b-1 and moved.

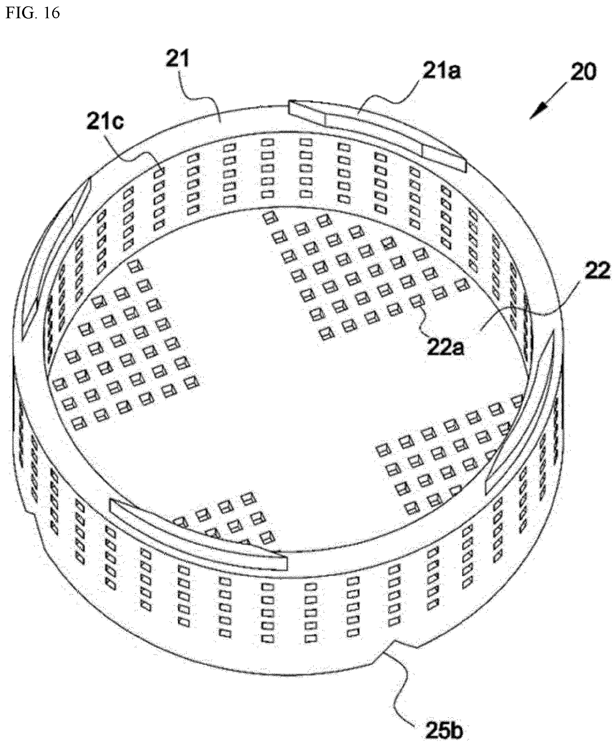

FIG. 16 is a view illustrating a storage part according to another embodiment of the present invention.

Referring to FIG. 16, through the first through-holes 21c and the second through-holes 22a formed in the body part 21 and the mesh part 22, respectively, a circulation structure in which a predetermined gas disposed outside is more easily input to and discharged from the storage part 20 can be created. Therefore, there is an effect of significantly increasing heat treatment efficiency for the objects located inside the storage part 20.

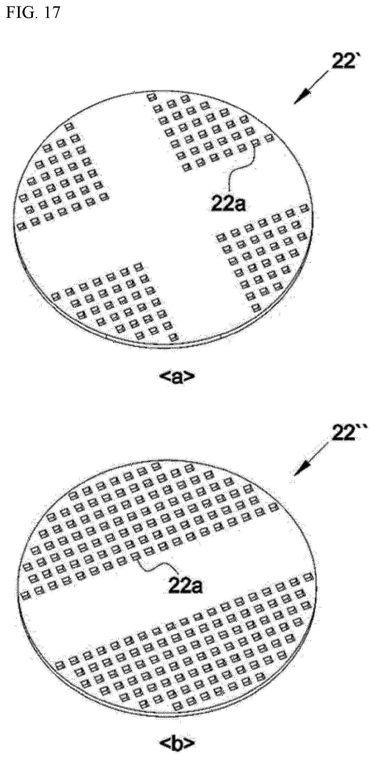

FIG. 17 is a view illustrating an embodiment of a mesh part according to the present invention.

Various embodiments may be implemented according to the number and arrangement of the plurality of through-holes formed in the mesh part 22. Specifically, as in FIG. 17A, a mesh part 22' may be provided to increase an amount of introduced predetermined gas input from the outside and to classify and diversify the types of objects to be heated. In addition, as in FIG. 17B, a mesh part 22" may be provided to further limit the types of objects being heated at once and to increase the number of heated objects.

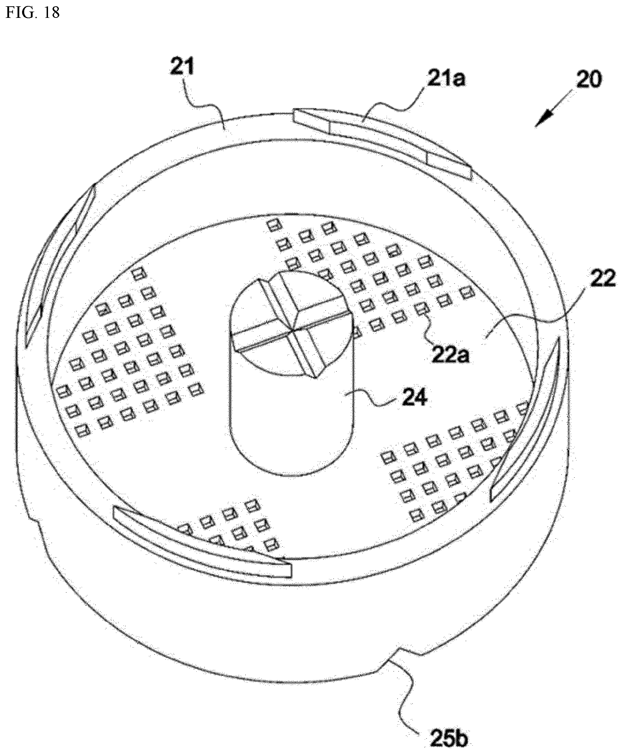

FIG. 18 is a view illustrating a storage part having an upper end engaging part and a lower end engaging part formed thereon and shows yet another embodiment of a storage part.

An upper end engaging part 24 and a lower end engaging part 25 are components that induce fastening and support between a plurality of storage parts 20 by coming into contact with each other. To this end, the upper end engaging part 24 and the lower end engaging part 25 are formed upward and downward, respectively, from a division part 23. Here, an upper end of the upper end engaging part 24 and a lower end of the lower end engaging part 25 are each formed in the shape of a wedge to be able to come into contact with each other. Accordingly, in a pair of storage parts 20 disposed in the vertical direction, the lower end engaging part 25 formed on the storage part 20 disposed above and the upper end engaging part 24 formed on the storage part 20 disposed below come into surface contact with each other.

A height of an end of the upper end engaging part 24 that faces upward may be provided to be lower than or equal to a height of an end of the first coupling part 21a described above. Accordingly, there is an effect of doubly increasing a support force for the pair of storage parts 20, which are disposed in the vertical direction and of which the first coupling part 21a and the second coupling part 21b are engaged, by contact between the upper end engaging part 24 and the lower end engaging part 25. In addition, when the fixing part 160 is inserted between a plurality of first coupling parts 21a, since a predetermined gas is easily input between the body part 21 and the fixing part 160, it is possible to derive an effect of maximizing thermal efficiency.

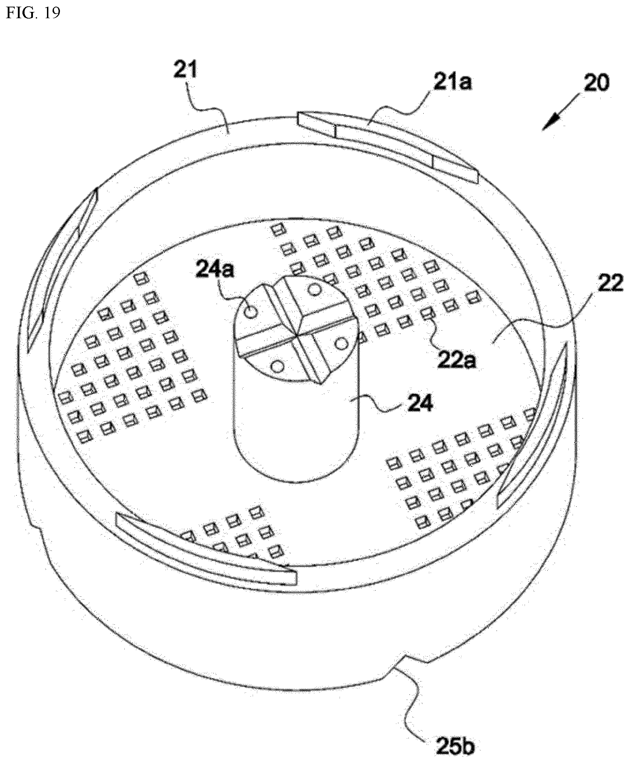

FIG. 19 is a view illustrating a storage part having a first contact part and a second contact part further formed thereon and shows yet another embodiment of a storage part.

Support performance between storage parts 20 can be maximized through a first contact part 24a and a second contact part 25a. The first contact part 24a and the second contact part 25a are formed on the upper end engaging part 24 and the lower end engaging part 25, respectively. Here, the first contact part 24a has a structure formed to protrude upward from the upper end engaging part 24 and is formed in various shapes such as a hemispherical shape and a polyhedral shape, and the second contact part 25a is formed in an engraved manner in the lower end engaging part 25 to correspond to the size and shape of the first contact part 24a. Accordingly, when a pair of storage parts 20 are disposed in the vertical direction so that the upper end engaging part 24 and the lower end engaging part 25 thereof come into contact with each other, the first contact part 24a is inserted into the second contact part 25a. Therefore, a more firmly fixed state can be maintained based on the surface contact between the upper end engaging part 24 and the lower end engaging part 25 and the insertion structure between the first contact part 24a and the second contact part 25a described above. Further, since the pair of storage parts 20 are disposed so that the first contact part 24a is inserted into the second contact part 25a, there is an effect of making it easy to arrange the storage parts 20 into correct positions.

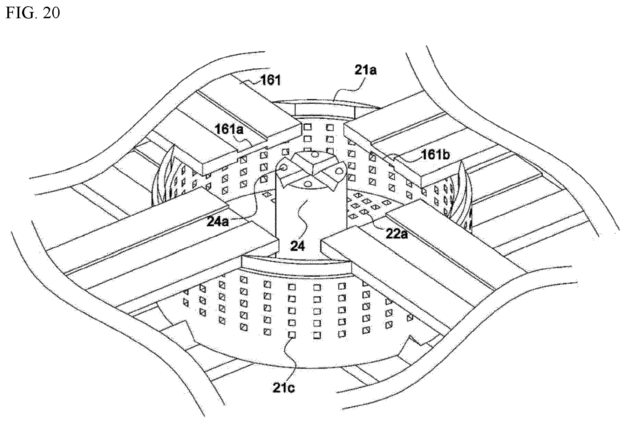

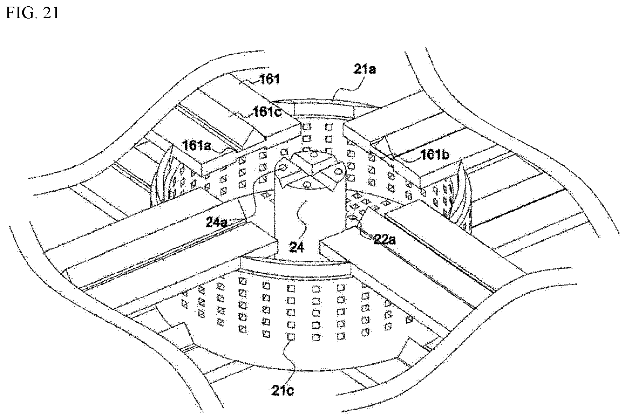

FIG. 20 is a view illustrating the storage part being fixed by a fixing part according to the present invention, and FIG. 21 is a view illustrating another embodiment of a storage part being fixed by a fixing part according to the present invention.

The fixing part 160 described above includes the insertion plate part 161, the first inlet hole 161a, the second inlet hole 161b, and the auxiliary fixing part 161c.

The insertion plate part 161 is a component located upward and downward from the storage part 20 to fix the height of the storage part 20. To this end, the insertion plate part 161 is installed inside the working part and has a structure that is withdrawable to be close to the central axis of the working part. In addition, the insertion plate part 161 comes into contact with a lower surface of the storage part 20 or is inserted between the plurality of first coupling parts 21a formed on the storage part 20. In this way, the position of the storage part 20 is fixed in the vertical direction.

The first inlet hole 161a and the second inlet hole 161b induce a predetermined gas, which is input into the working part, to be easily input into the storage part 20. To this end, the first inlet hole 161a and the second inlet hole 161b are formed in an upper surface and a lower surface, respectively, of the insertion plate part 161 and are formed in the longitudinal direction of the insertion plate part 161. Accordingly, the insertion plate part 161 has a cross-sectional structure having a step partially formed in the vertical direction.

The predetermined gas moved from the discharge part 150 to the working part moves along the first inlet hole 161a and the second inlet hole 161b, which are formed in the insertion plate part 161, in a process of moving toward the storage part 20 and is naturally input into the storage part 20. Accordingly, even while minimizing worker intervention, the input of the gas into the storage part 20 can be automatically induced, and simultaneously, movement of the storage part 20 can be suppressed, and the objects located inside the storage part 20 can be prevented from scattering unintentionally.

The auxiliary fixing part 161c is a component strengthening a fixing strength between the insertion plate part 161 and the storage part 20 and is configured as a bar-shaped member having the same cross-sectional area and shape as the first guide part 111b and the second guide part 112b-1 located on the input part 110. When the insertion plate part 161 on which the auxiliary fixing part 161c is formed is disposed in the vertical direction of the storage part 20, the auxiliary fixing part 161c may be inserted into the lower end guide groove 25b formed in the storage part 20 and may induce the storage part 20 to be arranged into its correct position.

The auxiliary fixing part 161c is formed in the first inlet hole 161a, and a width of a base side of the auxiliary fixing part 161c is configured to be smaller than a width of the first inlet hole 161a. Accordingly, since the first inlet hole 161a is not completely blocked by the auxiliary fixing part 161c, a function of inputting a gas into the storage part 20 can be maintained.

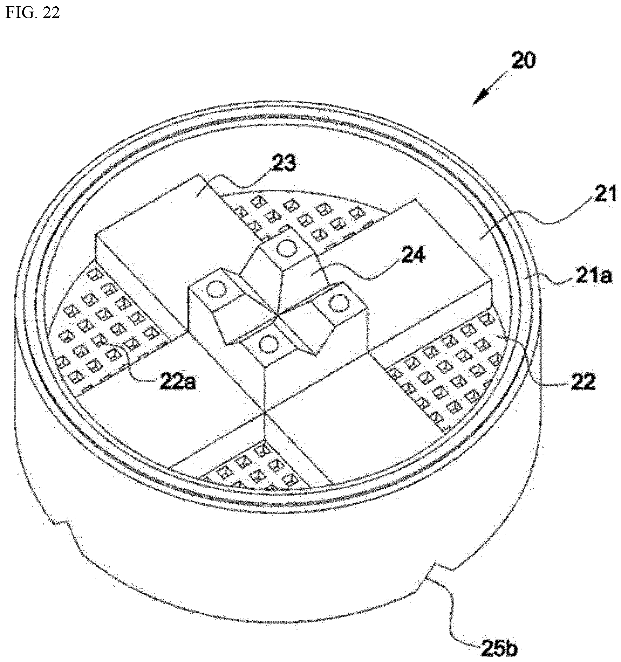

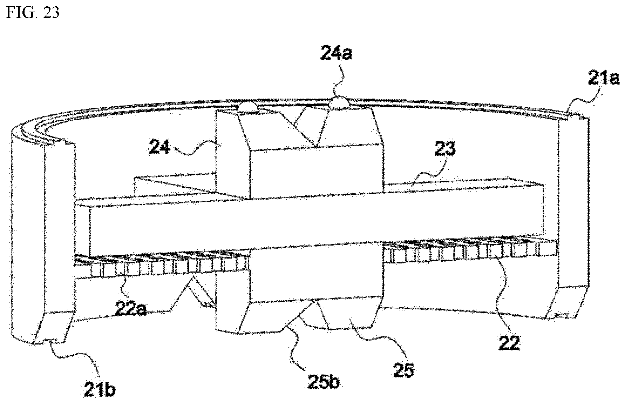

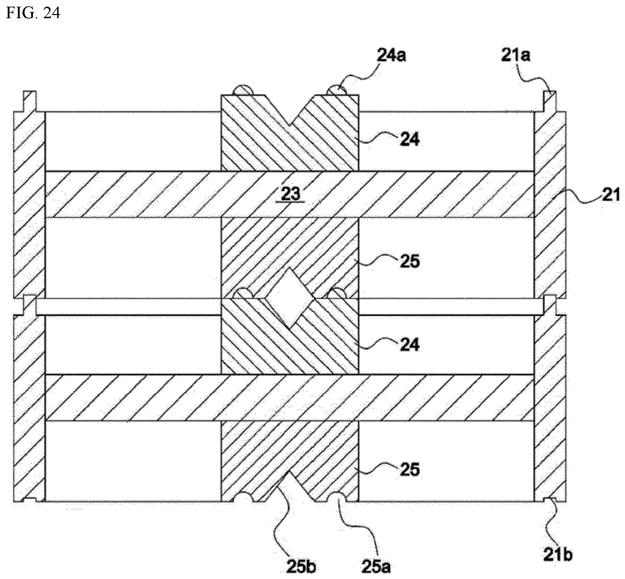

FIG. 22 is an overall view of a storage part according to an additional embodiment of the present invention, FIG. 23 is a cutout perspective view of the storage part according to the additional embodiment of the present invention, and FIG. 24 is a cross-sectional view illustrating arrangement of a pair of storage parts in a vertical direction according to the additional embodiment of the present invention.

The above-described body part 21, mesh part 22, first coupling part 21a, second coupling part 21b, upper end engaging part 24, and lower end engaging part 25 may apply identically to the additional embodiment disclosed as in FIGS. 22 to 24.

The mesh part 22 may be connected to an inner surface of the body part 21 and may be disposed at a position that is upward and spaced from a lower surface of the body part 21. Meanwhile, although the drawings show that a single mesh part 22 is provided, two or more mesh parts 22 may be arranged in the vertical direction and may induce higher thermal efficiency for objects.

The division part 23 is located inside the body part 21, imparts a position at which the mesh part 22 is fixed, and allows the body part 21 to be supported in the vertical direction. To this end, the division part 23 is configured as a bar- or stick-shaped member and has a structure in which an end comes into contact with the inner surface of the body part 21. In yet another embodiment of the present invention, the division part 23 is formed in a "+" shape and has four ends coming into contact with the body part 21, thereby allowing firmer support and allowing different types of objects to be input and heated separately from each other.

An inner space of the body part 21 may be partitioned by the division part 23. At the same time, the mesh part 22 disposed inside the body part 21 may be integrally configured with the body part 21 and may cause portions of the space to be separated from each other. In this way, there is an effect of allowing objects having different compositions or forms to be heated independently. Meanwhile, the upper end engaging part 24 and the lower end engaging part 25, which have been described above, are formed upward and downward, respectively, from the division part 23.

When two or more storage parts 20 are input to the working part through the input part 110, the storage parts 20 are arranged in the vertical direction and heated. In this process, the second coupling part 21b, the lower end engaging part 25, and the second contact part 25a included in the storage part 20 located above are engaged to the first coupling part 21a, the upper end engaging part 24, and the first contact part 24a included in the storage part 20 located below by coming into contact therewith or being inserted thereinto.

The plurality of storage parts 20 having the above-described multi-contact and engagement structure can be supported more firmly in the vertical direction and can easily be arranged into correct positions, thereby minimizing worker intervention.

Although embodiments of the present invention have been described above with reference to the accompanying drawings, those of ordinary skill in the art to which the present invention pertains should understand that the present invention can be embodied in other specific forms without changing the technical spirit or essential features thereof. Therefore, the embodiments described above should be understood as illustrative, instead of limiting, in all aspects.

[Modes of the Invention]

The modes of the invention have been described above in the best mode of the invention.

[Industrial Applicability]

The present invention can provide an apparatus for recycling of waste batteries.

**Claims**

1. An apparatus for recycling of waste batteries, the apparatus comprising:

   a working part in which objects are placed to heat the objects and recover valuable metals from the objects, wherein in the working part, the objects are heat-treated in a mixed reducing gas atmosphere in which log(PCO2/PCO), which is a logarithmic value of a division value of partial pressures of carbon dioxide and carbon monoxide, ranges from -2.15 to 2.5.

2. The apparatus of claim 1, wherein the valuable metals consist of at least one or more of cobalt (Co), nickel (Ni), manganese (Mn), and lithium (Li).

3. The apparatus of claim 1, wherein the working part includes:

   a first working part where a first internal temperature is created;
   a second working part having a second internal temperature at a lower side of the first working part; and
   a third working part having a third internal temperature at a lower side of the second working part, and
   the logarithmic value varies corresponding to the first internal temperature, the second internal temperature, and the third internal temperature.

4. The apparatus of claim 3, wherein:

   when the first internal temperature, the second internal temperature, or the third internal temperature corresponds to at least one of a range of 500 to 600 °C, a range of 600 to 700 °C, a range of 700 to 800 °C, a range of 800 to 900 °C, and a range of 900 to 1,000 °C,
   the logarithmic value belongs to at least one range among a range of 0.45 to 2.50, a range of -0.20 to 2.15, a range of -0.90 to 1.85, a range of -1.55 to 1.60, and a range of -2.15 to 1.40.

5. The apparatus of claim 1, further comprising:

   an input part feeding the objects to the working part;
   a heating part heating the objects inside the working part; and
   a discharge part withdrawing the objects from the working part.

6. The apparatus of claim 5, wherein the input part includes a movable partition part controlling connection of an inner space between the working part and the input part.

7. The apparatus of claim 5, wherein the input part includes a first gas discharge part discharging a predetermined gas input to the working part.

8. The apparatus of claim 5, wherein the heating part includes:

   a first heating part;
   a second heating part located at a lower side of the first heating part; and
   a third heating part located at a lower side of the second heating part, and
   the first heating part, the second heating part, and the third heating part are operated independently or together.

9. The apparatus of claim 5, wherein the discharge part includes:

   a gas supply part inputting a predetermined gas to the working part; and
   a second gas discharge part ventilating an inner space of the discharge part.

10. The apparatus of claim 5, wherein the discharge part includes:

    a second opening/closing part partitioning an inner space of the discharge part; and
    a cooling part cooling the objects input to the partitioned inner space.

FIG. 1

FIG. 2

FIG. 3

FIG. 4

```
┌─────────────────────────────────┐
│ SET LOGARITHMIC VALUE OF PARTIAL│
│   PRESSURES OF CO AND CO₂       │
└─────────────────────────────────┘
```

$CO_2$

| INPUT PREDETERMINED GAS | OPEN AND EXHAUST FIRST GAS DISCHARGE PART |

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

22`

22a

<a>

22``

22a

<b>

FIG. 18

FIG. 19

FIG. 20

FIG. 21

FIG. 22

FIG. 23

FIG. 24

## INTERNATIONAL SEARCH REPORT

| International application No. |
| --- |
| **PCT/KR2023/013920** |

### A. CLASSIFICATION OF SUBJECT MATTER

**H01M 10/54**(2006.01)i; **C22B 7/00**(2006.01)i; **B09B 3/40**(2022.01)i; **F27D 5/00**(2006.01)i; **F27D 19/00**(2006.01)i; **C22B 23/02**(2006.01)i; **C22B 26/12**(2006.01)i; **C22B 47/00**(2006.01)i

According to International Patent Classification (IPC) or to both national classification and IPC

### B. FIELDS SEARCHED

Minimum documentation searched (classification system followed by classification symbols)

H01M 10/54(2006.01); B01J 6/00(2006.01); C22B 23/02(2006.01); C22B 26/22(2006.01); C22B 5/02(2006.01); C22B 7/00(2006.01); F26B 5/04(2006.01); F27D 99/00(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐배터리 (waste battery), 재활용 (recycling), 이산화탄소 (carbon dioxide), 일산화탄소 (carbon monoxide), 환원 분위기 (inert atmosphere)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-1618738 B1 (RESEARCH INSTITUTE OF INDUSTRIAL SCIENCE & TECHNOLOGY) 10 May 2016 (2016-05-10) <br> See abstract; claim 1; paragraphs [0009], [0057], [0058] and [0065]; and figure 1. | 1-10 |
| Y | KR 10-2020-0055235 A (PUKYONG NATIONAL UNIVERSITY INDUSTRY-UNIVERSITY COOPERATION FOUNDATION) 21 May 2020 (2020-05-21) <br> See abstract; claims 1-4, 7 and 14; and paragraph [0006]. | 1-10 |
| Y | KR 10-2022-0088188 A (POSCO et al.) 27 June 2022 (2022-06-27) <br> See abstract; claim 1; paragraphs [0049] and [0088]; and figures 3-5. | 3,4,8,9 |
| Y | KR 10-2426585 B1 (ECOPRO MATERIALS, CO., LTD.) 01 August 2022 (2022-08-01) <br> See claim 1. | 7 |
| A | KR 10-1831260 B1 (CHUNG, Kyeong Hwi et al.) 22 February 2018 (2018-02-22) <br> See entire document. | 1-10 |

☐ Further documents are listed in the continuation of Box C.    ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **21 December 2023** | **21 December 2023** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013920**

| Patent document cited in search report | | | Publication date (day/month/year) | Patent family member(s) | | | Publication date (day/month/year) |
|---|---|---|---|---|---|---|---|
| KR | 10-1618738 | B1 | 10 May 2016 | None | | | |
| KR | 10-2020-0055235 | A | 21 May 2020 | KR | 10-2249266 | B1 | 06 May 2021 |
| | | | | US | 2021-0269894 | A1 | 02 September 2021 |
| | | | | WO | 2020-101089 | A1 | 22 May 2020 |
| KR | 10-2022-0088188 | A | 27 June 2022 | CN | 116783443 | A | 19 September 2023 |
| | | | | EP | 4265993 | A1 | 25 October 2023 |
| | | | | KR | 10-2501948 | B1 | 21 February 2023 |
| | | | | WO | 2022-131871 | A1 | 23 June 2022 |
| KR | 10-2426585 | B1 | 01 August 2022 | WO | 2023-163336 | A1 | 31 August 2023 |
| KR | 10-1831260 | B1 | 22 February 2018 | None | | | |

Form PCT/ISA/210 (patent family annex) (July 2022)